# EUROPÄISCHE PATENTSCHRIFT

(11) **EP 2 086 814 B1**
(45) Veröffentlichungstag und Bekanntmachung des Hinweises auf die Patenterteilung: **21.07.2010**
(21) Anmeldenummer: 08759768.8
(22) Anmeldetag: 20.05.2008
(51) Int. Cl.: B62D 1/06

(54) **VIBRATORBAUGRUPPE FÜR EIN KRAFTFAHRZEUG**
VIBRATORY ASSEMBLY FOR A MOTOR VEHICLE
COMPOSANT VIBRATEUR POUR UN VÉHICULE À MOTEUR

(30) Priorität: 23.05.2007 DE 102007024140
(43) Veröffentlichungstag der Anmeldung: 12.08.2009
(73) Patentinhaber: Takata-Petri AG, 63743 Aschaffenburg (DE)
(72) Erfinder: KERSTAN, Stefan, 67846 Gross-Zimmern (DE); KANDLER, Marcus, 63639 Flörssbachtal (DE)
(74) Vertreter: Baumgärtel, Gunnar
(86) Internationale Anmeldenummer: PCT/EP2008/056152
(87) Internationale Veröffentlichungsnummer: WO 2008/142067

(56) Entgegenhaltungen:
- EP-A- 0 856 432
- EP-A- 0 958 965
- DE-U1-202004 001 832
- US-A1- 2006 097 857

## Beschreibung

Die Erfindung betrifft eine Vibratorbaugruppe gemäß dem Oberbegriff des Anspruchs 1.

Eine derartige Vibratorbaugruppe für ein Kraftfahrzeug zum Erzeugen einer durch eine Person haptisch oder akustisch wahrnehmbaren Schwingung umfasst ein eine Tragstruktur aufweisendes Kraftfahrzeugteil mit einer mit der Tragstruktur verbundenen Hülle, sowie einen von der Hülle eingeschlossenen Vibrator, der derart mit der Hülle gekoppelt ist, dass durch den Vibrator erzeugte Schwingungen auf die Hülle übertragbar und durch eine Person haptisch (durch Berühren der Hülle) erfassbar sind Ein derartige Vibratorbaugruppe ist aus der DE 102 11 946 C1 und der EP-A-0 958 965 bekannt.

Der Erfindung liegt das Problem zugrunde, eine Vibratorbaugruppe der eingangs genannten Art sowie ein Verfahren zum Anregen einer Schwingung eines Kraftfahrzeugteiles bereitzustellen, bei der bzw. bei dem die Einstellbarkeit der Schwingungseigenschaften verbessert ist.

Dieses Problem wird durch eine Vibratorbaugruppe mit den Merkmalen des Anspruchs 1 gelöst. Danach ist vorgesehen, dass der Vibrator zum Übertragen der Schwingungen auf die Hülle über zumindest ein zusätzliches Federelement mit der Tragstruktur des Kraftfahrzeugteiles verbunden ist.

Durch diese aktive Lagerung des Vibrators über zumindest ein separates Federelement wird ein Mehrmassenschwinger, umfassend den Vibrator und die mit dem Vibrator über das Federelement gekoppelte Tragstruktur gebildet, wobei die Schwingung dieses Schwingungssystems hinsichtlich ihrer charakteristischen Größen (Frequenz und Amplitude) durch die Wahl der Kopplungsstärke (Federkonstante des mindestens einen Federelementes), der Frequenz und Amplitude der Erregerschwingung des Vibrators, sowie der Wechselwirkung des Vibrators mit der Tragstruktur beim Auftreffen auf die Tragstruktur (passive Lagerung des Vibrators) einstellbar ist. Die aktive Lagerung zeichnet sich also insbesondere dadurch aus, das eine permanente Kopplung (veränderlicher Stärke) zwischen dem Vibrator und der Tragstruktur durch zumindest ein separates Federelement vorhanden ist.

Der Vibrator ist vorzugsweise dazu ausgebildet, zwischen einer ersten und einer zweiten Position hin und her zu schwingen. Eine derartige Schwingung kann entlang einer festen Raumrichtung erfolgen, d.h., der Vibrator ist "richtungsweisend" durch das zumindest eine Federelement gelagert. Dabei verläuft jene Richtung vorzugsweise quer zu einer Oberfläche der Tragstruktur, gegen die der Vibrator zum Anregen einer Schwingung der Tragstruktur periodisch stößt.

Die erste und die zweite Position, die jeweils einem Umkehrpunkt der Schwingung des Vibrators entspricht, muss jedoch nicht raumfest sein und kann eine Bewegung im Raum durchlaufen (ungerichtete aktive Lagerung).

In einer Variante der Erfindung ist der Vibrator derart über das mindestens eine Federelement mit der Tragstruktur gekoppelt, dass er in einer ersten Position (z.B. einem Umkehrpunkt des Vibrators) an der Tragstruktur anliegt und in einer zweiten Position (z.B. einem weiteren Umkehrpunkt des Vibrators) zur Tragstruktur beabstandet angeordnet ist. Allerdings kann der Vibrator auch in der zweiten Position die Tragstruktur berühren oder dicht benachbart zu dieser angeordnet sein. Die erste Position ist vor allem dadurch ausgezeichnet, dass der Vibrator in jener ersten Position gegen die Tragstruktur stößt, also einen Impuls auf die Tragstruktur überträgt, um diese zum Schwingen anzuregen.

Bei dem Vibrator handelt es sich bevorzugt um eine Vorrichtung mit einem Erregerelement, das beweglich in einem das Erregerelement umgebenden Gehäuse gelagert ist, wobei das Erregerelement zum Erzeugen einer Schwingung des Gehäuses (Vibrators) derart mit dem Gehäuse gekoppelt ist, dass die Bewegung des Erregerelementes eine Schwingung des Gehäuses erzeugt. Die Bewegung des Erregerelementes kann in einer Rotation bestehen, wobei das Erregerelement eine Unwucht aufweist, oder in einer linearen (periodischen) Bewegung des Erregerelementes zwischen zwei Stellungen. Das Erregerelement kann über ein Federmittel mit dem Gehäuse gekoppelt sein (aktive Lagerung) und/oder direkt gegen das Gehäuse stoßen um dieses zu Schwingungen anzuregen (passive Lagerung).

Die Hülle des Kraftfahrzeugteiles liegt vorzugsweise zumindest abschnittsweise formschlüssig am Gehäuse an, so dass Schwingungen des Gehäuses auch direkt auf die Hülle übertragbar sind.

Bevorzugt ist der Vibrator über das Gehäuse mittels des mindestens einen Federelementes mit der Tragstruktur gekoppelt. Es können natürlich auch mehrere Federelemente zur aktiven Lagerung des Vibrators (Gehäuses) eingesetzt werden. Ebenso besteht die Möglichkeit mehrere Vibratoren mit der Tragstruktur über ein oder mehrere Federelemente zu koppeln.

Zum Übertragen von Impulsen auf die Tragstruktur weist der Vibrator zumindest einen Anlagebereich auf, der dazu ausgebildet ist, beim Schwingen des Vibrators aus der zweiten in die erste Position gegen die Tragstruktur zu stoßen, wobei der mindestens eine Anlagebereich an einer der Tragstruktur zugewandten Seite vom Gehäuse des Vibrators in Richtung auf die Tragstruktur abragt.

In einer Variante der Erfindung ist vorgesehen, dass sich der mindestens eine Anlagebereich zur Tragstruktur hin verjüngt, insbesondere konisch zuläuft. Hierbei kann der Anlagebereich insbesondere auch spitz zulaufen, so dass die Anlagefläche, über die der Anlagebereich in Kontakt mit der Tragstruktur treten kann im Wesentlichen punktförmig ausgebildet ist. Hierdurch kann der Vibrator gezielt (punktuell) Kraft in die Tragstruktur einleiten und entsprechende, von einem Erregerzentrum ausgehende Schwingungen der Tragstruktur auslösen. Eine davon abweichende Form der Anregung der Tragstruktur wird bewirkt, wenn die Anlagefläche vergleichsweise größer ausgebildet ist und flächig auf die Tragstruktur aufschlägt.

Des Weiteren kann die Anlagefläche gegenüber einer äußeren Oberfläche der Tragstruktur geneigt sein. Derartig geneigte Anlageflächen von Anlagebereichen des Gehäuses eignen sich insbesondere zur Beeinflussung der Richtung der zu übertragenen Impulse und somit zur Beeinflussung der Schwingungsausbreitung entlang der Tragstruktur.

Bevorzugt sind mehrere zueinander beabstandete Anlagebereiche am Gehäuse bzw. Vibrator vorgesehen, die dazu eingerichtet und vorgesehen sind, beim Schwingen des Vibrators aus der zweiten in die erste Position gegen die Tragstruktur zu stoßen, um einen Schwingungszustand der Tragstruktur anzuregen oder zu beeinflussen. Ein derartiger Stoßvorgang der Anlagebereiche erfolgt vorzugsweise synchron. Dabei können die Anlagebereich alle in der gleichen Weise ausgebildet sein oder unterschiedlich (entsprechend den oben dargelegten Ausformungen).

In einer Variante der Erfindung bildet die Hülle einen Berührbereich aus, der dazu eingerichtet und vorgesehen ist, durch eine Person berührt zu werden. Der Vibrator ist dabei derart ausgelegt und mit dem Berührbereich der Hülle gekoppelt, dass durch den Vibrator erzeugte Schwingungen auf den Berührbereich der Hülle übertragbar und dort durch eine Person beim Berühren des Berührbereiches erfasst werden können.

In einer bevorzugten Ausführungsform der Erfindung ist das Kraftfahrzeugteil als ein Lenkrad ausgebildet, wobei die Tragstruktur als ein Lenkradskelett des Lenkrades und die Hülle als eine das Lenkradskelett umgebende Lenkradhülle ausgebildet ist.

Des Weiteren wird das der Erfindung zugrunde liegende Problem durch ein Verfahren mit den Merkmalen des Anspruchs 27 gelöst, das insbesondere zur Verwendung einer erfindungsgemäßen Vibratorbaugruppe geeignet ist.

Das erfindungsgemäße Verfahren umfasst die folgenden Schritte: In-Schwingung-Versetzen des über das mindestens eine Federelement mit der Tragstruktur verbundenen Vibrators, so dass die Schwingungen des Vibrators die Tragstruktur über das mindestens eine Federelement zu Schwingungen anregen, und Kontrollieren der Schwingung des Vibrators derart, dass zwischen der angeregten Schwingung der Tragstruktur und der anregenden Schwingung des Vibrators eine vorbestimmbare Phasenverschiebung erzeugt wird, um die Amplitude der angeregten Schwingung der Tragstruktur (und somit des Kraftfahrzeugteiles) einzustellen.

Hierbei können insbesondere die folgenden Schritte ablaufen:

Das im Gehäuse des Vibrators gelagerte Erregerelement (z.B. Unwucht bzw. Erregermasse) befindet sich zunächst in Ruhestellung, so dass keine Bewegung (Schwingung) des Vibrators stattfindet.

Zu Beginn wird das Erregerelement beschleunigt, z.B. durch Bewegen einer Erregermasse von der Tragstruktur weg, so dass das Erregerelement seine kinetische Energie zumindest teilweise auf das umgebende Gehäuse überträgt, beispielsweise indem es gegen das Gehäuse stößt, und zwar derart, dass das Gehäuse infolge des Impulsübertrages von der Tragstruktur weg bewegt wird (eine Bewegung des Erregerelementes wird vorzugsweise elektromotorisch bewirkt).

Hierdurch wird die kinetische Energie des Erregerelementes (Gehäuses) auf die aktive Lagerung des Vibrators übertragen, d.h., das Federelement wird gespannt und übt eine Kraft auf die an das Federelement gekoppelte Tragstruktur aus, so dass der an dem Federelement befestigte Teil der Tragstruktur in Richtung auf das Gehäuse des Vibrators beschleunigt wird, d.h., der Impuls des Erregers wird in die eigentliche (zu erzeugende) mechanische Schwingung der Tragstruktur umgewandelt. Ausgehend von dem Befestigungspunkt des Federelementes an der Tragstruktur breitet sich diese Schwingung in der Folge auf das gesamte Kraftfahrzeugteil aus.

Hierbei liegt die Bedeutung der aktiven Lagerung, hier in Form des mindestens einen Federelementes, darin, dass durch geeignete Wahl der Federkonstante der Hub des Vibrators (Gehäuses), d.h., dessen maximale Beabstandung zur Tragstruktur einstellbar ist, sowie die Phasenverschiebung zwischen der Schwingung des Erregerelementes und dem gekoppelten System (Pendel) umfassend das Federelement und die damit verbundene Tragstruktur.

Somit entsteht durch die aktive Lagerung des Vibrators in Form des mindestens einen Federelementes ein Mehrmassenschwinger, wobei die Frequenz und Amplitude der Schwingung jenes Mehrmassenschwingers durch das Stoppen und Anregen des Erregerelementes zu geeigneten Zeitpunkten, die nach bekannten Gesetzmäßigkeiten der Physik bestimmbar sind, kontrollierbar (einstellbar) sind.

Nach dem das Erregerelement (Unwucht oder linear bewegbare Erregermasse) eine maximale Beschleunigung von der Tragstruktur weg erfahren hat, wird die Bewegung des Erregerelementes umgekehrt (bzw. bei einer Unwucht in die gleiche Rotationsrichtung fortgeführt) so dass sich das Erregerelement in Richtung auf die Tragstruktur bewegt. Währenddessen wird weiterhin ein Teil der Energie über das (noch gespannte) mindestens eine Federelement auf die Tragstruktur übertragen.

Diese fortführende Bewegung der Tragstruktur erlaubt bei entsprechender Ansteuerung des Erregerelementes das Ausbilden einer Phasenverschiebung zwischen den Schwingungen der Erregermasse und der Tragstruktur, die ein Erhöhen der Amplitude der Schwingung der Tragstruktur ermöglicht. Dabei stößt das Erregerelement unter Zwischenlage des Gehäuses zu einem Zeitpunkt auf die Tragstruktur, zu dem die Tragstruktur ihre Relativbewegung in Richtung auf das Gehäuse abgeschlossen hat und daher von dem Erregerelement in die entgegen gesetzte Richtung angestoßen werden kann.

Beim Auftreffen des Gehäuses des Vibrators auf die Tragstruktur über die passive Lagerung in Form von Anlageflächen kann das System erneut beeinflusst werden.

Durch Abstimmen der aktiven und passiven Lagerung und mittels der Anregung des Erregerelementes sind Phasenverschiebungen erzeugbar, die es erlauben, die Amplitude der resultierenden Schwingung vorbestimmbar zu erhöhen.

Die Kombinationen der vorgenannten Lagerungsarten sind frei wählbar, solange sie in geeigneter Abstimmung erfolgen. Beide Lagerungsarten sind auch in einem Element (zweikomponentiges Teil) kombinierbar, so dass sowohl die aktive Lagerung als auch die passive Lagerung an derselben (räumlichen) Position ausgebildet bzw. angeordnet sein können.

Die passive Lagerung wird durch ihre an das zu erregende System anliegende Art, Größe und Dimension der Oberfläche einstellbar. Sie kann sowohl gerichtete als auch "ungerichtete", d.h., der Richtung nach diffuse Impulse weitergeben. Durch Einbringen von verschiedenen Härten der Materialien an diesen Punkten können Impuls- bzw. Schwingungseigenschaften und Geräuschentwicklung eingestellt werden.

Die aktive Lagerung wird durch das mindestens eine Federelement bereitgestellt, über dessen Federkonstante (Vorhaltekraft) das schwingende System hinsichtlich seiner charakterisierenden Größen (Frequenz, Amplitude, Phase) einstellbar ist. Die aktive Lagerung kann ebenfalls richtungsweisend wirken, d.h. eine Schwingungsbewegung des Vibrators nur entlang einer bestimmten Richtung zulassen.

Die Phasenverschiebung der resultierenden Schwingung der Tragstruktur gegenüber der Erregerschwingung kann durch beide Lagerungsarten eingestellt werden, so dass jeweils definierte Amplitudenerhöhungen der resultierenden Schwingung bewirkt werden können. Des Weiteren kann auch über eine Ansteuerung des Erregerelementes (Stillstand des Erregers bzw. Schwingung des Erregers mit voreinstellbarer Frequenz und Amplitude) die Frequenz und Amplitude der resultierenden Schwingung der Tragstruktur (und somit die der Hülle bzw. des gesamten Kraftfahrzeugteiles) eingestellt werden.

Die Abstimmung der beiden Lagerungsarten (aktiv und passiv) aufeinander ermöglicht im Ergebnis die Vibratorbaugruppe für den Einsatz als MMI (Mensch-Maschine-Schnittstelle) geeignet abzustimmen.

Weitere Einzelheiten und Vorteile der Erfindung werden bei der nachfolgenden Beschreibung von Ausführungsbeispielen anhand der Figuren deutlich werden.

Es zeigen:
- Fig. 1: eine ausschnitthafte Schnittansicht einer Vibratorbaugruppe für ein Kraftfahrzeug, mit einem Vibrator, der über zwei Federelemente mit dem Lenkradkranzskelett eines Lenkradkranzes eines Lenkrades gekoppelt ist;
- Fig. 2: eine schematische Darstellung einer Vibratorbaugruppe der in der Figur 1 gezeigten Art;
- Fig. 3: eine Draufsicht auf eine der Tragstruktur zugewandte Unterseite eines Vibrators der in der Figur 1 gezeigten Art;
- Fig. 4A: eine schematische Schnittansicht entlang der Linie IV-IV der Figur 3;
- Fig. 4B: eine schematische Schnittansicht entlang der Linie IV-IV der Figur 3;
- Fig. 4C: eine schematische Schnittansicht entlang der Linie IV-IV der Figur 3;
- Fig. 5A: eine schematische Schnittansicht entlang der Linie V-V der Figur 3;
- Fig. 5B: eine schematische Schnittansicht entlang der Linie V-V der Figur 3; und
- Fig. 6: eine Schnittansicht eine Abwandlung der in der Figur 1 gezeigten Vibratorbaugruppe.

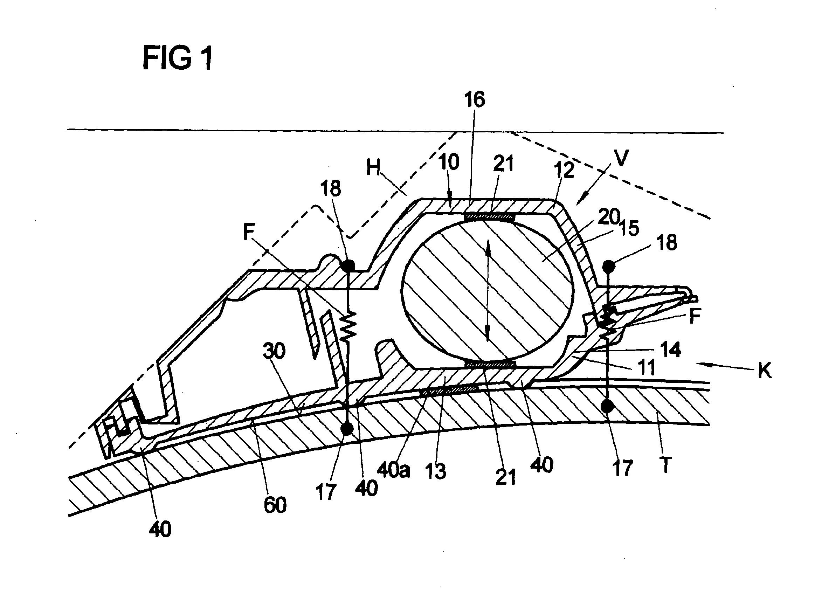

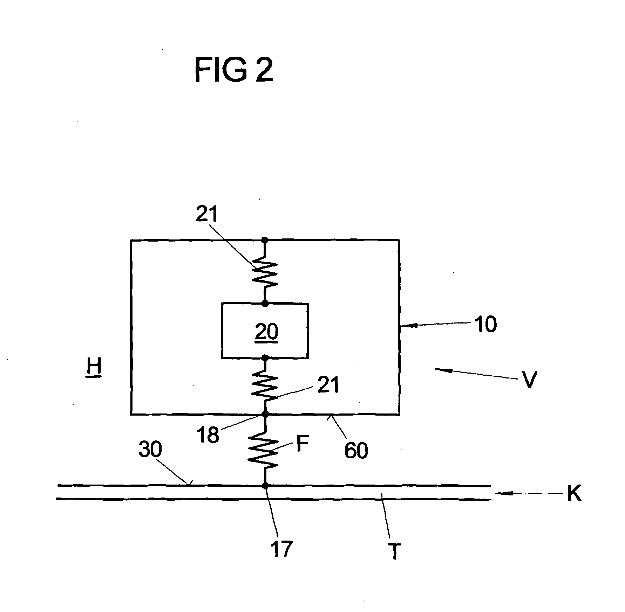

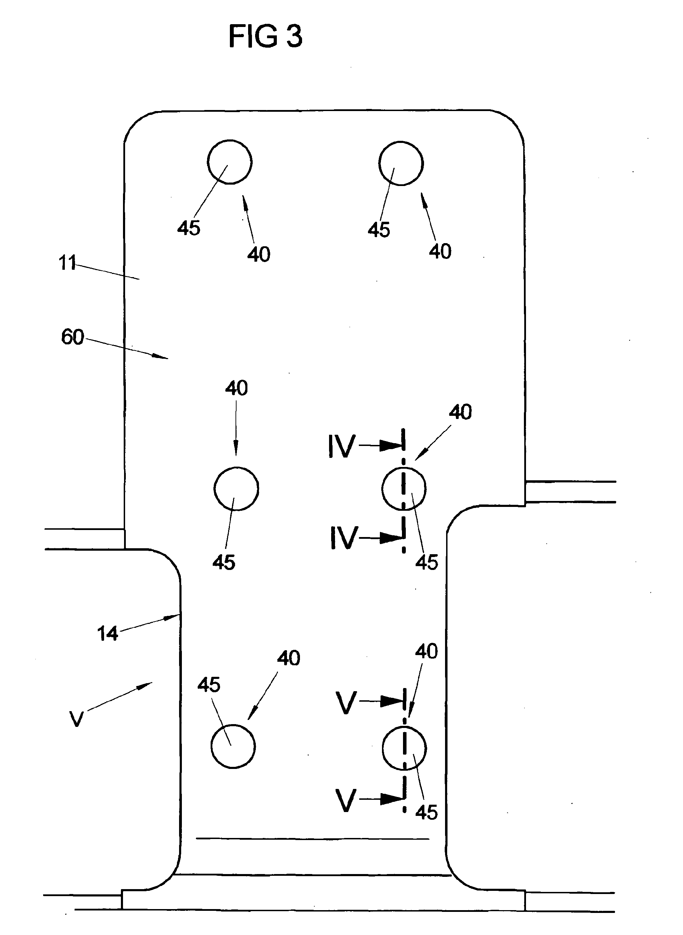

Figur 1 zeigt im Zusammenhang mit den Figuren 2 und 3 eine Vibratorbaugruppe für ein Kraftfahrzeug, die dazu ausgelegt ist, ein Kraftfahrzeugteil in Form eines Lenkrades K zumindest partiell zu Schwingungen anzuregen, so dass diese durch einen Fahrer wahrnehmbar sind. Die Vibratorbaugruppe umfasst ein Vibrator V bestehend aus einem Gehäuse 10 und einem darin gelagerten Erregerelement, das derart mit dem Gehäuse 10 gekoppelt ist, dass es das Gehäuse 10 zu Schwingungen anregen kann, deren Frequenz- und Amplitudenverlauf jeweils vorbestimmbar sind. Auf diese Weise kann eine beliebige Zahl unterscheidbarer haptischer (akustischer) Signale erzeugt werden, mittels derer der Fahrer beim Führen des Fahrzeuges informiert werden kann. Derartige Informationen umfassen z.B. Warnungen des Fahrers vor gefährlichen Situationen oder Betriebszustände von Komponenten einer Kraftfahrzeugausstattung.

Das Gehäuse 10 ist vorzugsweise zweiteilig aufgebaut und weist eine untere, benachbart zur Tragstruktur T angeordnete Schale 11 und eine mit der unteren Schale 11 verbundene oberer Schale 12 auf. Von einem entlang der Tragstruktur T verlaufenden Boden 13 der unteren Schale 11 steht eine umlaufende Wandung 14 der unteren Schale 11 ab, über die die untere Schale 11 - vorzugsweise mittels einer Clipsverbindung - mit einer umlaufenden Wandung 15 der oberen Schale 12 des Gehäuses 10 verbunden ist, die von einem Boden 16 der oberen Schale 12 in Richtung auf die untere Schale 11 absteht.

Das Gehäuse 10 ist über zwei beabstandet zueinander angeordnete Federelemente F, bei denen es sich um Spiralfedern handeln kann, an einer Tragstruktur in Form eines Lenkradkranzskeletts T gelagert, das einen Grundkörper für einen Lenkradkranz des Lenkrades bildet. Das jeweilige Federelement F ist dabei über einen ersten freien Endabschnitt 17 am Lenkradkranz T und über einen dem ersten Endabschnitt 17 gegenüberliegenden zweiten freien Endabschnitt 18 am Gehäuse 10 befestigt, und zwar vorzugsweise an der oberen Schale 12.

Das Gehäuse 10 ist über die beiden Federelemente F schwingungsfähig mit dem Lenkradkranzskelett T gekoppelt, und zwar derart, dass das Gehäuse 10 beim Schwingen periodisch Impulse auf das Lenkradkranzskelett T, z.B. durch Stöße, übertragen kann.

Dabei ist diese durch die Federelemente F bereitgestellte aktive Lagerung des Gehäuses 10 vorzugsweise dadurch ausgezeichnet, dass durch jene aktive Lagerung keine Einschränkung im Hinblick auf die (zeitabhängige) räumliche Position und die Bewegungsrichtung des Gehäuses 10 bestehen, d.h., dass Gehäuse 10 kann in alle Raumrichtungen gleichermaßen schwingen. Es besteht dabei grundsätzlich über die Federelemente F eine Kopplung zwischen dem Gehäuse 10 und der Tragstruktur T, wobei die jeweilige momentane Kopplungsstärke von der Position des Gehäuses 10 in Bezug auf die Tragstruktur T abhängt, d.h., von der Spannung der Federelemente F.

Die Schwingung (Erregerschwingung) des Vibrators V wird mittels eines Erregerelementes 20 in Form einer Erregermasse erzeugt, die zwischen den Böden 13, 16 der beiden Schalen 11, 12 beweglich gelagert ist, so dass die Erregermasse 20 zum Anregen des Gehäuses 10 Impulse auf das Gehäuse 10 übertragen kann. Dabei kann es sich um eine permanente, aktive Lagerung handeln, z.B., über Federmittel 21, über die die Erregermasse 20 mit dem Gehäuse 10 verbunden ist oder um eine passive Lagerung, d.h., die Erregermasse 20 kann zur Anlage an das Gehäuse 10 gebracht werden und dabei Impulse auf das Gehäuse 10 übertragen, deren Betrag und Richtung durch die Ausbildung der beim Stoßen in Kontakt tretenden Bereiche des Gehäuses 10 und des Erregerelementes 20 im Hinblick auf Form und Materialeigenschaften (Elastizität) beeinflussbar sind. Bei einer passiven Lagerung erfolgt also nur dann eine Kopplung (Wechselwirkung) zwischen Erregermasse 20 und Gehäuse 10 (oder zwischen Gehäuse 10 und Tragstruktur T) wenn die beteiligten Elemente durch Aneinanderstoßen Impulse übertragen.

Die Schwingungen des Gehäuses 10 werden zum einen durch die aktive Kopplung F auf die Tragstruktur T übertragen und zum anderen durch Stoßen des Gehäuses 10 gegen die Tragstruktur T. Insbesondere kann die Erregermasse 20 derart angesteuert werden, dass eine Phasenverschiebung zwischen der Schwingung der Erregermasse 20 und der angeregten Schwingung der Tragstruktur T entsteht. Hierdurch kann die Amplitude der erzwungenen Schwingung der Tragstruktur T erhöht werden (insbesondere bei einer Phasenverschiebung von π/2).

Des Weiteren wird die Phasenverschiebung zwischen der Schwingung des Erregerelementes 20 und der Schwingung der Tragstruktur T auch durch die passive Lagerung des Gehäuses 10 bezüglich der Tragstruktur T beeinflusst, d.h., durch die Wechselwirkung zwischen Tragstruktur T und Gehäuse 10, wenn diese beim Schwingen des Gehäuses 10 periodisch gegeneinander stoßen. Diese Wechselwirkung lässt sich zum einen durch die Materialauswahl aufeinander treffender Bereiche der Tragstruktur T und des Gehäuses 10 einstellen (z.B. durch elastische, ggf. permanente Kontaktbereiche 40a zwischen Gehäuse 10 und Tragstruktur T) und zum anderen durch die geometrische Form der aufeinander treffenden Bereiche. Bei der in der Figur 1 dargestellten Ausführungsform weist das Lenkradkranzskelett T eine glatte, dem Gehäuse 10 zugewandte Oberfläche 30 auf, gegen die beim Schwingen des Gehäuses 10 Anlagebereiche 40 des Gehäuses stoßen, die entlang einer quer zur Oberfläche 30 verlaufenden Richtung vom Gehäuse 10, und zwar vom Boden 13 der unteren Schale 11, in Richtung auf jene Oberfläche 30 abstehen. Vorzugsweise stehen vom besagten Boden 13 sechs zueinander beabstandete derartige Anlagebereiche 40 ab. Die Anlagebereiche 40 weisen jeweils eine der Oberfläche 30 der Tragstruktur T zugewandte Anlagefläche 45 auf, über die die Anlagebereiche 40 mit der Tragstruktur T in Kontakt treten.

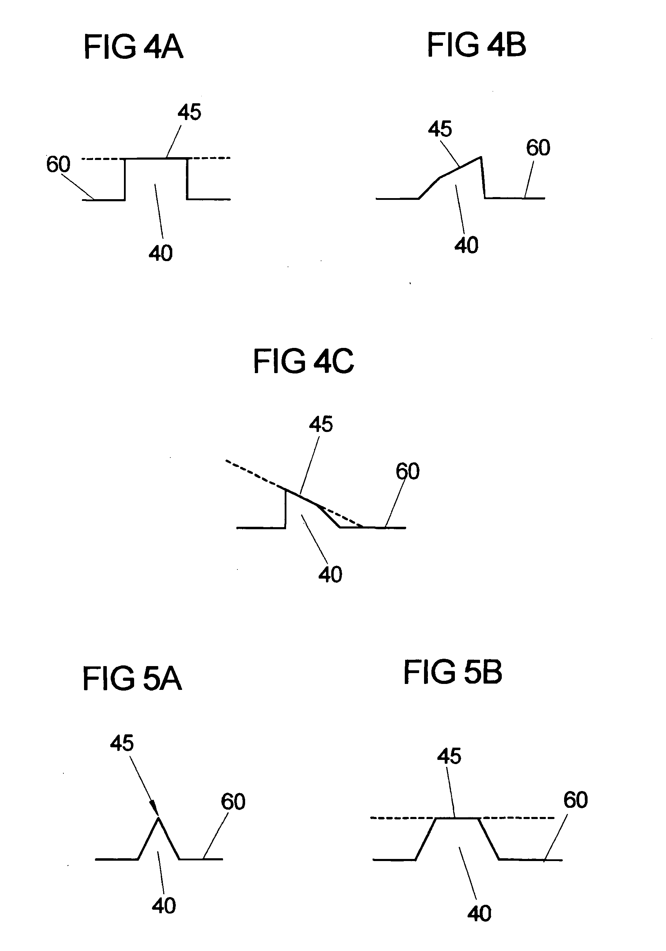

Dabei können die Anlagebereiche 40 gemäß den Figuren 5A und 5B konisch zulaufen, wobei die Anlageflächen 45 insbesondere punktförmig ausgebildet sein können oder im Vergleich zur Fläche des Bodens 13 der unteren Schale 11 eine signifikant oder um Größenordnungen kleinere Fläche aufweisen können.

In einer anderen Variante sind die Anlagebereiche 40 entsprechend der Figur 4A zylindrisch ausgebildet und weisen jeweils eine Anlagefläche 45 auf, die parallel zur darunter liegenden Oberfläche 30 ausgerichtet ist.

Entsprechend den Figuren 4B und 4C können die Anlageflächen 45 auch gegenüber der Oberfläche 30 geneigt verlaufen. Eins solche Form der Anlageflächen 45 eignet sich insbesondere zur Einflussnahme auf die Richtung des zu übertragenden (schwingungsanregenden) Impulses.

Die vorstehend beschriebenen Anlagebereiche 40 bzw. Anlageflächen 45 können zur Beeinflussung der Schwingungsübertragung zwischen Erregerelement 20 (Gehäuse 10) und Tragstruktur T auch beliebig miteinander kombiniert werden.

Ausgehend von der Tragstruktur T kann sich die durch den Vibrator V erzwungene Schwingung über das gesamte Kraftfahrzeugteil K fortpflanzen, wobei die Hülle H natürlich auch direkt durch den Vibrator V angeregt wird, da diese das Gehäuse 10 vorzugsweise eng umschließt. Dabei umgreift die Lenkradhülle H das Lenkradkranzskelett T im Querschnitt und kann beispielsweise auf das Lenkradkranzskelett T aufgeschäumt sein. Auf die Lenkradhülle H übertragene Schwingungen sind insbesondere an einer äußeren Oberfläche der Lenkradhülle H, die einen Berührbereich 5 bildet, durch einen Fahrer haptisch wahrnehmbar, z.B. durch Berühren des Berührbereiches 5 mit einer Hand.

Die vermittels des Vibrators V erregten Schwingungen des Kraftfahrzeugteiles K können natürlich auch akustisch wahrnehmbar sein, d.h., das schwingungsfähige Kraftfahrzeugteil K bzw. Teile davon wirken in diesem Fall als Schallwandler.

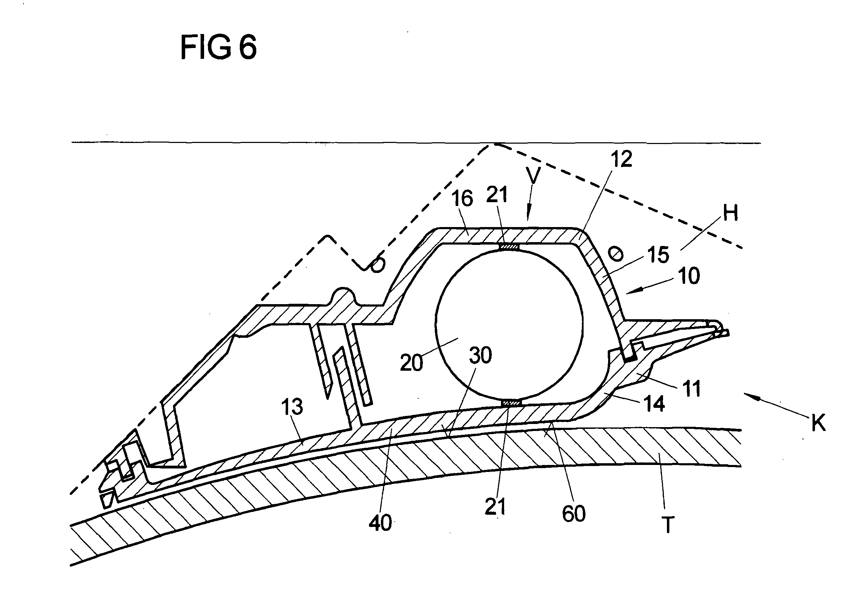

Figur 6 zeigt eine Abwandlung des in der Figur 1 gezeigten Ausführungsbeispieles, bei der im Unterschied zur Figur 1 der Anlagebereich 40 des Gehäuses 10 durch dessen gesamte der Oberfläche 30 der Tragstruktur T zugewandte Unterseite 60 des Bodens 13 des Gehäuses 10 gebildet wird. Des Weiteren ist das Gehäuse 10 der Figur 6 lediglich passiv über die besagte Unterseite 60 an der Tragstruktur T gelagert.

## Patentansprüche

1. Vibratorbaugruppe für ein Kraftfahrzeug zum Erzeugen einer durch eine Person wahrnehmbaren Schwingung eines Kraftfahrzeugteiles, mit:
- einem Kraftfahrzeugteil (K), das eine Tragstruktur (T) und eine hiermit verbundene Hülle (H) aufweist, und
- einem von der Hülle (H) umgebenden Vibrator (V), der dazu ausgebildet ist, die Hülle (H) zu Schwingungen anzuregen, die durch eine Person wahrnehmbar sind,
**dadurch gekennzeichnet,**
**dass** der Vibrator (V) zum Anregen der Schwingungen der Hülle (H) mittels zumindest eines von der Hülle (H) verschiedenen Federelementes (F) mit der Tragstruktur (T) des Kraftfahrzeugteiles (K) gekoppelt ist, so dass die Schwingungen der Hülle (H) über die Tragstruktur (T) angeregt werden.

2. Vibratorbaugruppe nach Anspruch 1, **dadurch gekennzeichnet, dass** die Federkonstante des mindestens einen Federelementes (F) in Abhängigkeit von der Schwingung des Vibrators (V) derart bemessen ist, dass eine vorbestimmbare Phasenverschiebung zwischen der Schwingung des Vibrators (V) und der durch den Vibrator (V) angeregten Schwingung der Tragstruktur (T) erzeugt wird.

3. Vibratorbaugruppe nach einem der vorhergehenden Ansprüche, **dadurch gekennzeichnet, dass** der Vibrator (V) ein Gehäuse (10) aufweist.

4. Vibratorbaugruppe nach Anspruch 3, **dadurch gekennzeichnet, dass** der Vibrator (V) einen beweglich im Gehäuse (10) gelagertes Erregerelement (20) aufweist.

5. Vibratorbaugruppe nach Anspruch 4, **dadurch gekennzeichnet, dass** das Erregerelement (20) zum Erzeugen einer Schwingung des Gehäuses (10) derart mit dem Gehäuse (10) gekoppelt ist, dass die Bewegung des Erregerelementes (20) eine Schwingung des Gehäuses (10) erzeugt.

6. Vibratorbaugruppe nach Anspruch 4 oder 5, **dadurch gekennzeichnet, dass** das Erregerelement (20) über Federmittel (21) mit dem Gehäuse (10) gekoppelt ist.

7. Vibratorbaugruppe nach einem der Ansprüche 3 bis 6, **dadurch gekennzeichnet, dass** der Vibrator (V) über das Gehäuse (10) mittels des mindestens einen Federelementes (F) mit der Tragstruktur (T) gekoppelt ist.

8. Vibratorbaugruppe nach einem der vorhergehenden Ansprüche, **dadurch gekennzeichnet, dass** der Vibrator (V) dazu ausgebildet ist, zwischen einer ersten und einer zweiten Position hin und her zu schwingen, und dass der Vibrator (V) zumindest einen Anlagebereich (40) aufweist, der dazu eingerichtet und vorgesehen ist beim Schwingen des Vibrators (V) aus der zweiten in die erste Position gegen die Tragstruktur (T) zu stoßen, um einen Schwingungszustand der Tragstruktur (T) anzuregen oder zu beeinflussen.

9. Vibratorbaugruppe nach Anspruch 8, **dadurch gekennzeichnet, dass** der mindestens eine Anlagebereich (40) in Abhängigkeit von der Schwingung des Vibrators (V) derart elastisch ausgebildet ist, dass eine vorbestimmbare Phasenverschiebung zwischen der Schwingung des Vibrators (V) und der durch den Vibrator angeregten Schwingung der Tragstruktur (T) erzeugt wird.

10. Vibratorbaugruppe einem der Ansprüche 8 bis 9, **dadurch gekennzeichnet, dass** der mindestens eine Anlagebereich (40) eine der Tragstruktur (T) zugewandte Anlagefläche (45) aufweist, mit der der Anlagebereich (40) gegen die Tragstruktur stößt.

11. Vibratorbaugruppe nach Anspruch einem der Ansprüche 8 bis 10, **dadurch gekennzeichnet, dass** mehrere zueinander beabstandete Anlagebereiche (40) vorgesehen sind, die dazu eingerichtet und vorgesehen sind, beim Schwingen des Vibrators (V) aus der zweiten in die erste Position gegen die Tragstruktur (T) zu stoßen, um einen Schwingungszustand der Tragstruktur (T) anzuregen oder zu beeinflussen.

12. Vibratorbaugruppe nach einem der vorhergehenden Ansprüche, **dadurch gekennzeichnet, dass** der Vibrator (V) derart mit der Hülle (H) gekoppelt ist, dass durch den Vibrator (V) erzeugte Schwingungen die Hülle (H) zu Schwingungen anregen, die durch eine Person akustisch oder haptisch wahrnehmbar sind.

13. Vibratorbaugruppe nach einem der vorhergehenden Ansprüche, **dadurch gekennzeichnet, dass** das Kraftfahrzeugteil (K) als ein Lenkrad ausgebildet ist, wobei insbesondere die Tragstruktur (T) als ein Lenkradskelett des Lenkrades ausgebildet ist.

14. Vibratorbaugruppe nach einem der vorhergehenden Ansprüche, **dadurch gekennzeichnet, dass** eine Mehrzahl von der Hülle (H) umgebener Vibratoren (V) vorgesehen ist, wobei jene Vibratoren (V) jeweils dazu ausgebildet sind, die Hülle (H) zu Schwingungen anzuregen, die durch eine Person wahrnehmbar sind, und wobei die einzelnen Vibratoren (V) zum Anregen der Schwingungen der Hülle (H) jeweils über zumindest ein zusätzliches Federelement (F) mit der Tragstruktur (T) des Kraftfahrzeugteiles (K) gekoppelt sind.

15. Verfahren zum Anregen einer Schwingung eines Kraftfahrzeugteiles unter Verwendung einer Vibratorbaugruppe nach einem der vorhergehenden Ansprüche, mit den Schritten:
- Anregen des über das Federelement (F) mit der Tragstruktur (T) gekoppelten Vibrators (V) zu einer Schwingung, so dass sich die Schwingung des Vibrators (V) über das mindestens eine Federelement (F) auf die Tragstruktur (T) überträgt, und
- Ansteuern des Vibrators (V) derart, dass zum Beeinflussen der Amplitude der Schwingung der Tragstruktur (T) eine Phasenverschiebung zwischen der Schwingung des Vibrators (V) und der Schwingung der Tragstruktur (T) erzeugt wird.

## Claims

1. Vibrator assembly for a vehicle for generating a vibration of a vehicle part perceivable by a person with
- a vehicle part (K) having a supporting structure (T) and a casing (H) connected with said supporting structure (T), and
- a vibrator (V) surrounded by the casing (H) which is designed to stimulate the casing (H) to vibrate the vibrations being perceivable by a person,
**characterized in that**
the vibrator (V) for exiting the vibrations of the casing (H) is coupled via at least one spring element (F) differing from the casing (H) with the supporting structure (T) of the vehicle part (K) so that the vibrations of the casing (H) are excited via the supporting structure (T).

2. Vibrator assembly according to claim 1, **characterized in that** the spring constant of the at least one spring element (F) is determined in dependency of the vibration of the vibrator (V) in such a manner that a phase shift between the vibration of the vibrator (V) and the vibration of the supporting structure (T) excited by the vibrator (V) is generated which phase shift can be predetermined.

3. Vibrator assembly according to one of the preceding claims, **characterized in that** the vibrator (V) has a housing (10).

4. Vibrator assembly according to claim 3, **characterized in that** the vibrator (V) has an exciter element (20) movably mounted in the housing (10).

5. Vibrator assembly according to claim 4, **characterized in that** the exciter element (20) for generating a vibration of the housing (10) is coupled to the housing (10) in such a manner that the movement of the exciter element (20) generates a vibration of the housing (10).

6. Vibrator assembly according to claim 4 or 5, **characterized in that** the exciter element (20) is coupled to the housing (10) via spring means (21).

7. Vibrator assembly according to one of the claims 3 to 6, **characterized in that** the vibrator (V) is coupled to the supporting structure (T), via the housing (10) by means of the at least one spring element (F).

8. Vibrator assembly according to one of the preceding claims, **characterized in that** the vibrator (V) is designed for oscillating between a first and a second position, and the vibrator (V) has at least one contact area (40) which is configured and provided for pushing against the supporting structure (T) during oscillation of the vibrator (V) from the second into the first position in order to excite or influence a vibration state of the supporting structure (T).

9. Vibrator assembly according to claim 8, **characterized in that** the at least one contact area (40) in dependency of the vibration of the vibrator (V) is formed elastically in such a manner that a phase shift between the vibration of the vibrator (V) and the vibration of the supporting structure (T) excited by the vibrator is generated which phase shift may be predetermined.

10. Vibrator assembly according to one of the claims 8 to 9, **characterized in that** the at least one contact area (40) has a contact surface (45) facing the supporting structure (T) with which the contact area (40) pushes against the supporting structure.

11. Vibrator assembly according to one of the claims 8 to 10, **characterized in that** multiple contact areas (40) spaced from each other are provided which are configured and provided for pushing against the supporting structure (T) during oscillating of the vibrator (V) from the second into the first position in order to excite or influence a vibration state of the supporting structure (T).

12. Vibrator assembly according to one of the preceding claims, **characterized in that** the vibrator (V) is coupled with the casing (H) in such a manner that vibrations generated by the vibrator (V) induce vibrations of the casing (H) which may be acoustically or haptically perceived by a person.

13. Vibrator assembly according to one of the preceding claims, **characterized in that** the vehicle part (K) is designed as a steering wheel, wherein in particular the supporting structure (T) is designed as a steering wheel skeleton of the steering wheel.

14. Vibrator assembly according to one of the preceding claims, **characterized in that** a multitude of vibrators (V) enclosed by the casing (H) are provided, wherein each of those vibrators (V) are designed to stimulate the casing (H) to vibrate, the vibrations being perceivable by a person, and wherein the individual vibrators (V) are coupled in each case to the supporting structure (T) of the vehicle part (K) via at least one additional spring element (F) for exciting the vibrations of the casing (H).

15. Method for inducing a vibration of a vehicle part by using a vibrator assembly according to one of the preceding claims with the following steps:
- stimulating the vibrator (V) being coupled to the supporting structure (T) via the spring element (F) to a vibration so that the vibration of the vibrator (V) is transferred to the supporting structure (T) via the at least one spring element (F), and
- controlling the vibrator (V) in such a manner that a phase shift between the vibration of the vibrator (V) and the vibration of the supporting structure (T) is generated in order to influence the amplitude of the oscillation of the supporting structure (T).

## Revendications

1. Composant vibrateur pour un véhicule à moteur pour la génération d'une vibration d'une partie de véhicule à moteur perceptible par une personne, avec :
- une partie de véhicule à moteur (K) qui présente une structure porteuse (T) et une enveloppe (H) reliée à celle-ci, et
- un vibrateur (V) entouré par l'enveloppe (H) qui est réalisé afin d'exciter vibrationnellement l'enveloppe (H) de manière perceptible par une personne, **caractérisé en ce**
**que** le vibrateur (V) pour exciter les vibrations de l'enveloppe (H) est couplé à l'aide d'au moins un élément de ressort (F) différent de l'enveloppe (H) à la structure porteuse (T) de la partie de véhicule à moteur (K) de sorte que les vibrations de l'enveloppe (H) soient excitées par la structure porteuse (T).

2. Composant vibrateur selon la revendication 1, **caractérisé en ce que** la constante de ressort de l'au moins un élément de ressort (F) est mesurée en fonction de la vibration du vibrateur (V) de telle sorte qu'un décalage de phases pouvant être prédéterminé soit généré entre la vibration du vibrateur (V) et la vibration excitée par le vibrateur (V) de la structure porteuse (T).

3. Composant vibrateur selon l'une quelconque des revendications précédentes, **caractérisé en ce que** le vibrateur (V) présente un boîtier (10).

4. Composant vibrateur selon la revendication 3, **caractérisé en ce que** le vibrateur (V) présente un élément excitateur (20) logé de manière mobile dans le boîtier (10).

5. Composant vibrateur selon la revendication 4, **caractérisé en ce que** l'élément excitateur (20) pour générer une vibration du boîtier (10) est couplé au boîtier (10) de telle sorte que le mouvement de l'élément excitateur (20) génère une vibration du boîtier (10).

6. Composant vibrateur selon la revendication 4 ou 5, **caractérisé en ce que** l'élément excitateur (20) est couplé par des moyens de ressort (21) au boîtier (10).

7. Composant vibrateur selon l'une quelconque des revendications 3 à 6, **caractérisé en ce que** le vibrateur (V) est couplé par le boîtier (10) à l'aide de l'au moins un élément de ressort (F) à la structure porteuse (T).

8. Composant vibrateur selon l'une quelconque des revendications précédentes, **caractérisé en ce que** le vibrateur (V) est réalisé afin d'osciller en alternance entre une première et une seconde position et **en ce que** le vibrateur (V) présente au moins une zone d'appui (40) qui est configurée et prévue pour buter lors de la vibration du vibrateur (V) de la seconde à la première position contre la structure porteuse (T) afin d'exciter ou d'influencer un état de vibration de la structure porteuse (T).

9. Composant vibrateur selon la revendication 8, **caractérisé en ce que** l'au moins une zone d'appui (40) est réalisée de manière élastique en fonction de la vibration du vibrateur (V) de telle sorte qu'un décalage de phases pouvant être prédéterminé entre la vibration du vibrateur (V) et la vibration de la structure porteuse (T) excitée par le vibrateur soit généré.

10. Composant vibrateur selon l'une quelconque des revendications 8 à 9, **caractérisé en ce que** l'au moins une zone d'appui (40) présente une surface d'appui (45) tournée vers la structure porteuse (T), avec laquelle la zone d'appui (40) bute contre la structure porteuse.

11. Composant vibrateur selon l'une quelconque des revendications 8 à 10, **caractérisé en ce que** plusieurs zones d'appui (40) espacées les unes des autres sont prévues, lesquelles sont configurées et prévues pour buter lors de la vibration du vibrateur (V) de la seconde à la première position contre la structure porteuse (T) afin d'exciter ou d'influencer un état de vibration de la structure porteuse (T).

12. Composant vibrateur selon l'une quelconque des revendications précédentes, **caractérisé en ce que** le vibrateur (V) est couplé à l'enveloppe (H) de telle sorte que des vibrations générées par le vibrateur (V) excitent vibrationnellement l'enveloppe (H) de manière perceptible acoustiquement ou haptiquement par une personne.

13. Composant vibrateur selon l'une quelconque des revendications précédentes, **caractérisé en ce que** la partie de véhicule à moteur (K) est réalisée comme un volant, en particulier la structure porteuse (T) étant réalisée comme une ossature du volant.

14. Composant vibrateur selon l'une quelconque des revendications précédentes, **caractérisé en ce qu'**une pluralité de vibrateurs (V) entourés par l'enveloppe (H) est prévue, les vibrateurs (V) étant réalisés respectivement afin d'exciter vibrationnellement l'enveloppe (H) de manière perceptible par une personne, et les vibrateurs (V) individuels étant couplés pour l'excitation des vibrations de l'enveloppe (H) respectivement par au moins un élément de ressort (F) supplémentaire à la structure porteuse (T) de la partie de véhicule à moteur (K).

15. Procédé d'excitation d'une vibration d'une partie de véhicule à moteur en utilisant un composant vibrateur selon l'une quelconque des revendications précédentes, avec les étapes suivantes :
- excitation vibrationnelle du vibrateur (V) couplé par l'élément de ressort (F) à la structure porteuse (T) de sorte que la vibration du vibrateur (V) se transmette par l'au moins un élément de ressort (F) à la structure porteuse (T), et
- commande du vibrateur (V) de telle sorte que, pour influencer l'amplitude de la vibration de la structure porteuse (T), un décalage de phases entre la vibration du vibrateur (V) et la vibration de la structure porteuse (T) soit généré.
